# EUROPEAN PATENT APPLICATION

(11) **EP 4 159 396 A1**
(43) Date of publication of application: **05.04.2023**
(21) Application number: 21814647.0
(22) Date of filing: 28.05.2021
(51) Int. Cl.: B29B 13/00, C08J 99/00, G02B 1/04, B29C 48/06, B29C 48/21, B29C 48/285, B29C 48/365, B29C 48/37, G02B 6/02

(54) **OPTICS-USE RESIN MOLDED BODY PRODUCTION METHOD, RESIN FIBER PRODUCTION METHOD, AND RESIN FIBER PRODUCTION APPARATUS**

(30) Priority: 29.05.2020 JP 2020095041
(71) Applicant: NITTO DENKO CORPORATION, Ibaraki-shi Osaka 567-8680 (JP)
(72) Inventor: SAOMOTO Kenjiro, Ibaraki-shi, Osaka 567-8680 (JP); SUGIURA Shinsuke, Ibaraki-shi, Osaka 567-8680 (JP); OKADA Yasuaki, Ibaraki-shi, Osaka 567-8680 (JP); IRIE Sho, Ibaraki-shi, Osaka 567-8680 (JP)
(74) Representative: Cabinet Beau de Loménie
(86) International application number: PCT/JP2021/020554
(87) International publication number: WO 2021/241760

(57) **Abstract**

An optical resin formed body manufacturing method of the present invention includes: (i) depressurizing an inside of a container holding a molten optical resin; (ii) pressurizing the inside of the container holding the molten optical resin; and (iii) shaping the optical resin taken out of the container into a given shape. The steps (i) and (ii) are sequentially performed once each or are alternately performed two or more times each. In the step (i), a duration t1 [min] of the depressurization of the inside of the container is set such that the duration t1 and a viscosity µ1 [Pa•s] of the molten optical resin satisfy a relation µ1/t1 < 200. In the step (ii), a duration t2 [min] of the pressurization of the inside of the container is set such that the duration t2 and a viscosity µ2 [Pa•s] of the molten optical resin satisfy a relation µ2/t2 < 200. The viscosity µ1 is a viscosity of the optical resin at a shear rate of 0.05 s⁻¹ at a temperature in the container in the step (i). The viscosity µ2 is a viscosity of the optical resin at a shear rate of 0.05 s⁻¹ at a temperature in the container in the step (ii).

## Description

### TECHNICAL FIELD

The present invention relates to an optical resin formed body manufacturing method, a resin fiber manufacturing method, and a resin fiber manufacturing apparatus.

### BACKGROUND ART

A method, as disclosed in Patent Literature 1, for manufacturing a plastic optical fiber (hereinafter referred to as "POF") by heating and melting an optical resin and extrusion-molding the molten optical resin into a fiber shape is known.

Some optical resins used as raw materials in manufacturing of POFs include a volatile component. When such optical resins are molten and shaped with a volatile component therein, the resulting optical resin formed bodies include bubbles, which decrease the optical properties. Therefore, conventionally, in order to remove a volatile component in optical resins, optical resins are commonly maintained in a molten state for a certain period of time before extrusion of the molten optical resins.

### CITATION LIST

### Patent Literature

Patent Literature 1: JP 2000-356716 A

### SUMMARY OF INVENTION

### Technical Problem

However, long-term maintenance of optical resins in a molten state for removal of volatile components therein causes thermal decomposition of the optical resins, and thereby impurities are produced. The impurities, however, decrease the optical properties of POFs. Specifically, the impurities have refractive indices different from that of the material of a core portion of a POF, and that adversely affects an optical transmission loss in the core. Therefore, it is required to efficiently remove volatile components from optical resins in a molten state in a short period of time.

Therefore, the present invention aims to provide an optical resin formed body manufacturing method by which decreases in the optical properties of the resulting optical resin formed body can be reduced and by which a volatile component can be efficiently removed from an optical resin. The present invention also aims to provide a resin fiber manufacturing method by which a volatile component can be efficiently removed from an optical resin and a resin fiber manufacturing apparatus with which a volatile component can be efficiently removed from an optical resin.

### Solution to Problem

An optical resin formed body manufacturing method according to a first aspect of the present invention includes:
(i) depressurizing an inside of a container holding a molten optical resin;
(ii) pressurizing the inside of the container holding the molten optical resin; and
(iii) shaping the optical resin taken out of the container into a given shape,
wherein
the steps (i) and (ii) are sequentially performed once each or are alternately performed two or more times each,
in the step (i), a duration t1 [min] of the depressurization of the inside of the container is set such that the duration t1 and a viscosity µ1 [Pa•s] of the molten optical resin satisfy a relation µ1/t1 < 200,
in the step (ii), a duration t2 [min] of the pressurization of the inside of the container is set such that the duration t2 and a viscosity µ2 [Pa•s] of the molten optical resin satisfy a relation µ2/t2 < 200,
the viscosity µ1 is a viscosity of the optical resin at a shear rate of 0.05 s⁻¹ at a temperature in the container in the step (i), and
the viscosity µ2 is a viscosity of the optical resin at a shear rate of 0.05 s⁻¹ at a temperature in the container in the step (ii).

A resin fiber manufacturing method according a second aspect of the present invention includes:
(I) depressurizing an inside of a container holding a molten resin material;
(II) pressurizing the inside of the container holding the molten resin material; and
(III) spinning by extruding the molten resin material out of the container to shape the molten resin material into a fiber shape, wherein

the steps (I) and (II) are sequentially performed once each or are alternately performed two or more times each,
in the step (I), a duration t1 [min] of the depressurization of the inside of the container is set such that the duration t1 and a viscosity µ1 [Pa•s] of the molten resin material satisfy a relation µ1/t1 < 200,
in the step (II), a duration t2 [min] of the pressurization of the inside of the container is set such that the duration t2 and a viscosity µ2 [Pa•s] of the molten resin material satisfy a relation µ2/t2 < 200,
the viscosity µ1 is a viscosity of the resin material at a shear rate of 0.05 s⁻¹ at a temperature in the container in the step (I), and
the viscosity µ2 is a viscosity of the resin material at a shear rate of 0.05 s⁻¹ at a temperature in the container in the step (II).

A resin fiber manufacturing apparatus according to a third aspect of the present invention includes:
a holding portion that holds a resin material serving as a raw material of a resin fiber;
an extrusion portion that allows the resin material held in the holding portion to be extruded out of the holding portion;
a heating portion that heats the holding portion;
a pressure control portion that controls a pressure in the holding portion;
a depressurization mechanism that depressurizes an inside of the holding portion; and
a pressurization mechanism that pressurizes the inside of the holding portion, wherein
the pressure control portion controls the pressure in the holding portion such that depressurization and pressurization are alternately repeated at least once,
the pressure control portion depressurizes the inside of the holding portion such that a duration t1 [min] of the depressurization of the inside of the holding portion and a viscosity µ1 [Pa•s] of the resin material that is molten satisfy a relation µ1/t1 < 200,
the pressure control portion pressurizes the inside of the holding portion such that a duration t2 [min] of the pressurization of the inside of the holding portion and a viscosity µ2 [Pa•s] of the resin material that is molten satisfy a relation µ2/t2 < 200,
the viscosity µ1 is a viscosity of the resin material at a shear rate of 0.05 s⁻¹ at a temperature in the holding portion in the depressurization,
the viscosity µ2 is a viscosity of the resin material at a shear rate of 0.05 s⁻¹ at the temperature in the holding portion in the pressurization, and
the resin material extruded through the extrusion portion is shaped into a fiber shape.

### Advantageous Effects of Invention

By the optical resin formed body manufacturing method according to the first aspect of the present invention, decreases in the optical properties of the resulting optical resin molded article can be reduced and a volatile component can be efficiently removed from an optical resin. Moreover, a volatile component can be efficiently removed from the resin material by the resin fiber manufacturing method according to the second aspect of the present invention and with the resin fiber manufacturing apparatus according to the third aspect of the present invention.

### BRIEF DESCRIPTION OF DRAWINGS

FIG. 1A is a schematic diagram how depressurization and pressurization of an inside of a container holding a molten optical resin are alternately performed in an optical resin formed body manufacturing method according to an embodiment of the present invention.
FIG. 1B is a schematic diagram showing expansion and shrinkage of a bubble in an optical resin and a flow of the optical resin around the bubble during alternately performed depressurization and pressurization of an inside of a container in the optical resin formed body manufacturing method according to an embodiment of the present invention.
FIG. 2 is a graph showing an example of a relation between the time and a pressure in a container, the relation being repeated in a pressure switching cycle Δt in the optical resin formed body manufacturing method according to an embodiment of the present invention.
FIG. 3 is a schematic cross-sectional view showing an optical resin formed body manufacturing apparatus that is an example of an apparatus with which the optical resin formed body manufacturing method according to an embodiment of the present invention can be performed.
FIG. 4 is a schematic cross-sectional view showing a POF manufacturing apparatus for manufacturing a core and a clad of a POF by the optical resin formed body manufacturing method according to an embodiment of the present invention.
FIG. 5 is a cross-sectional view showing an example of a POF that can be manufactured using the apparatus shown in FIG. 4.

### DESCRIPTION OF EMBODIMENTS

An embodiment of an optical resin formed body manufacturing method of the present invention will be described.

The optical resin formed body manufacturing method of the present embodiment includes:
(i) depressurizing an inside of a container holding a molten optical resin;
(ii) pressurizing the inside of the container holding the molten optical resin; and
(iii) shaping the optical resin taken out of the container into a given shape.

In the optical resin formed body manufacturing method of the present embodiment, the depressurization of the inside of the container in the step (i) and pressurization of the inside of the container in the step (ii) are sequentially performed once each or are alternately performed two or more times each. That is, the depressurization and the pressurization are each performed at least once in the container.

In the depressurization in the step (i), a duration t1 [min] of the depressurization of the inside of the container is set such that the duration t1 and a viscosity µ1 [Pa•s] of the molten optical resin satisfy a relation µ1/t1 < 200. The viscosity µ1 is a viscosity of the optical resin at a shear rate of 0.05 s⁻¹ at a temperature in the container in the depressurization in the step (i).

In the pressurization in the step (ii), a duration t2 [min] of the pressurization of the inside of the container is set such that the duration t2 and a viscosity µ2 [Pa•s] of the molten optical resin satisfy a relation µ2/t2 < 200. The viscosity µ2 is a viscosity of the optical resin at a shear rate of 0.05 s⁻¹ at a temperature in the container in the pressurization in the step (ii).

Each viscosity of the optical resin at a shear rate of 0.05 s⁻¹ is a value measured by a rotational viscosity measurement method, and is measured using a rotational rheometer.

According to the above optical resin formed body manufacturing method of the present embodiment, without maintaining the optical resin in a molten state for a long period of time, a volatile component therein can be efficiently removed from the optical resin by depressurizing and pressurizing the inside of the container holding the molten optical resin under the above conditions. Consequently, inclusion of impurities produced by thermal decomposition of the optical resin in the resulting optical resin formed body can be reduced. That is, according to the optical resin formed body manufacturing method of the present embodiment, decreases in the optical properties of the resulting optical resin formed body can be reduced and the volatile component can be efficiently removed from the optical resin. Additionally, since the volatile component is removed from the optical resin, the optical resin formed body to be manufactured includes almost no bubbles. Because of these, an optical resin formed body for which decreases in optical properties are reduced and which has excellent optical properties can be manufactured efficiently by the optical resin formed body manufacturing method of the embodiment.

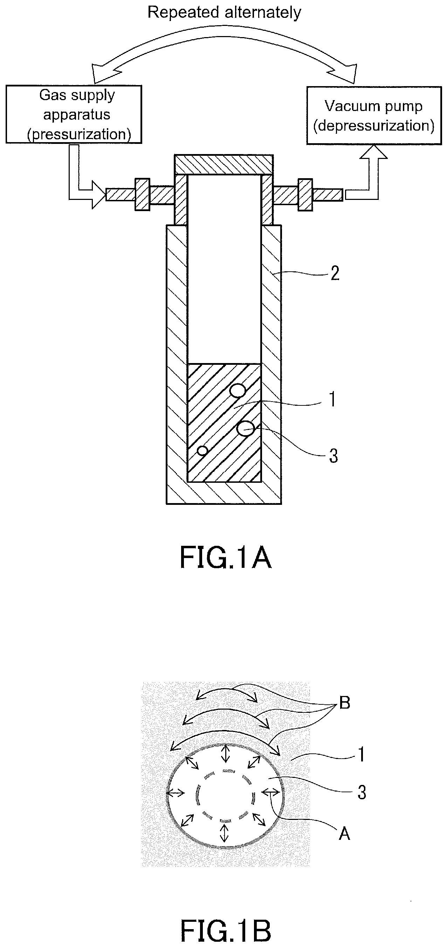

The reason why the volatile component can be efficiently removed from the optical resin by depressurizing and pressurizing the inside of the container holding the molten optical resin is as follows. FIG. 1A is a schematic diagram showing how depressurization and pressurization of an inside of a container 2 holding a molten optical resin 1 are alternately performed. FIG. 1B shows expansion and shrinkage of a bubble 3 in the optical resin 1 and a flow of the optical resin around the bubble 3 during alternately performed depressurization and pressurization of the inside of the container 2. In an example shown in FIG. 1A, the inside of the container 1 is depressurized using a vacuum pump and pressurized by introducing a gas into the container 1. By sequentially performing the depressurization and the pressurization of the molten optical resin 1 once each or, preferably, alternately performing the depressurization and the pressurization of the molten optical resin 1 two or more times each, preferably two or more times each, the bubble 3 generated in the molten optical resin 1 repeatedly undergoes expansion and shrinkage (an arrow A in FIG. 1B). That causes the optical resin 1 around the bubble 3 to flow (an arrow B in FIG. 1B). When the molten optical resin 1 is a fluid, namely a non-Newtonian fluid, whose viscosity depends on the shear rate, the flow of the optical resin 1 around the bubble 3 increases the shear rate of the optical resin 1 around the bubble 3 and decreases an apparent viscosity of the optical resin 1 around the bubble 3. The decrease in the apparent viscosity promotes rise of the bubble 3, making it easy for the bubble 3 to escape from the optical resin 1. Therefore, the volatile component can be efficiently removed from the optical resin 1 without maintaining the optical resin 1 in a molten state for a long period of time. It is thought that even when the molten optical resin 1 is a Newtonian fluid, the volatile component can be efficiently removed from the optical resin 1 owing to the following advantages. The advantages are, for example, as follows: (1) the bubble rises at a higher rate due to an increase in the diameter of the bubble in the depressurization, and that makes it easy for the bubble to escape from the optical resin; (2) the bubble that failed to escape from the optical resin in the depressurization and that is at a gas-liquid interface (top layer of a surface of the molten optical resin) of the optical resin bursts in the pressurization to be removed from the optical resin.

The optical resin formed body manufacturing method of the present embodiment will be described in more details.

As described above, in the depressurization in the step (i), the duration t1 [min] is required to be set such that the duration t1 and the viscosity µ1 [Pa•s] of the molten optical resin satisfy the relation µ1/t1 < 200. It is preferred that the duration t1 [min] and the viscosity µ1 [Pa•s] satisfy µ1/t1 ≤ 180. The preferred lower limit of µ1/t1 is not limited to a particular value, and may be, for example, 1 or greater, and is preferably 6 or greater.

As described above, in the pressurization in the step (ii), the duration t2 [min] is required to be set such that the duration t2 and the viscosity µ2 [Pa•s] of the molten optical resin satisfy the relation µ2/t2 < 200. It is preferred that the duration t2 [min] and the viscosity µ2 [Pa•s] satisfy µ2/t2 ≤ 180. The preferred lower limit of µ2/t2 is not limited to a particular value, and may be, for example, 1 or greater, and is preferably 6 or greater.

In the optical resin formed body manufacturing method of the present embodiment, the depressurization of the inside of the container in the step (i) and the pressurization of the inside of the container in the step (ii) are required to be sequentially performed once each or alternately performed two or more times each. However, as described above, the depressurization and the pressurization are preferably alternately performed two or more times each to decrease the apparent viscosity of the optical resin in the container and allow the bubble in the optical resin to escape more easily. For example, the depressurization and the pressurization are preferably alternately performed six or more times each. Because the depressurization and the pressurization are preferably repeated until the volatile component in the optical resin are removed as much as possible, the preferred upper limit of the number of times that the depressurization is repeated and the preferred upper limit of the number of time that the pressurization is repeated are not limited to particular values. In one example, the number of times that the depressurization is repeated and the number of time that the pressurization is repeated may each be 100 times or less.

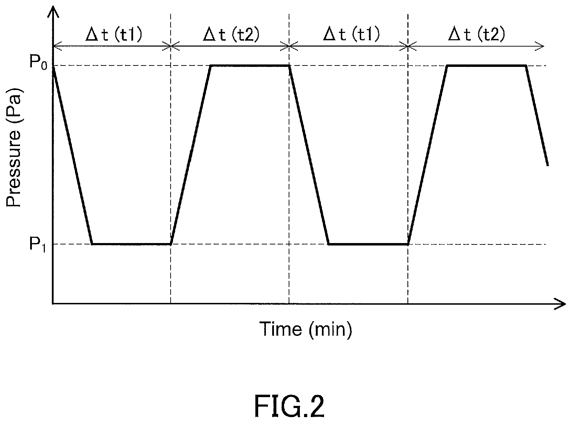

The depressurization of the inside of the container in the step (i) and the pressurization of the inside of the container in the step (ii) may be alternately performed in a pressure switching cycle Δt. The pressure switching cycle Δt refers to a time interval at which the depressurization and the pressurization of the inside of the container are switched. That is, in the case where the depressurization and the pressurization of the inside of the container are alternately performed in the pressure switching cycle Δt, the duration t1 of the depressurization of the inside of the container in the step (i) and the duration t2 of the pressurization of the inside of the container in the step (ii) are each the pressure switching cycle Δt. FIG. 2 shows a graph showing an example of a relation between the time and the pressure, the graph being obtained by repeating, in the pressure switching cycle Δt, depressurization of the inside of the container from an initial pressure P0 (e.g., ordinary pressure) to a pressure P1, pressurization of the inside of the container to the initial pressure P0, depressurization to the pressure P1, and pressurization to the initial pressure P0. In the example shown in FIG. 2, the inside of the container is depressurized to the same pressure P1 by the repeated depressurization, and the pressure is returned back to the initial pressure P0 by the repeated pressurization. However, the relation between the time and the pressure is not limited to this example. In the case where the depressurization step and the pressurization step are repeated, the pressure to which the inside of the container is depressurized may be different from one depressurization step to another, and the pressure to which the inside of the container is pressurized may be different from one pressurization step to another.

The duration t1 and the duration t2 are each preferably, for example, 5 min or more and 30 min or less, more preferably 5 min or more and 20 min or less. The duration t1 and the duration t2 in the above range make it possible to efficiently remove the volatile component from the optical resin.

In the case where the depressurization of the inside of the container in the step (i) and the pressurization of the inside of the container in the step (ii) are alternately performed in the pressure switching cycle Δt, the pressure switching cycle Δt is preferably, for example, 5 min or more and 30 min or less. The pressure switching cycle Δt in the above range makes it possible to efficiently remove the volatile component from the optical resin.

The order of the depressurization and the pressurization is not particularly limited. That is, the pressure inside the container may be controlled in the order from depressurization, to pressurization, to depressurization, to pressurization, to depressurization, to pressurization ... or in the order from pressurization, to depressurization, to pressurization, to depressurization, to pressurization, to depressurization .... However, in terms of the solubility of a gas in the molten optical resin, the inside of the container is preferably depressurized first, and then pressurized. For example, an initial pressure of the inside of the container holding the molten optical resin may be ordinary pressure, and the inside of the container at the ordinary pressure may be depressurized, and then pressurized to a pressure lower than the ordinary pressure.

A ratio of the maximum pressure in the container in the pressurization in the step (ii) to the minimum pressure in the container in the depressurization in the step (i) ((the maximum pressure of the inside of the container in the pressurization)/(the minimum pressure in the container in the depressurization); hereinafter referred to as "pressure ratio in the container") is preferably, for example, 100 or more. The pressure ratio in the container set in this range allows the volatile component to be efficiently removed from the optical resin. The preferred upper limit of the pressure ratio in the container is not limited to a particular value. In one example, the pressure ratio in the container is 10000 or less.

In the step (i), the minimum pressure in the container is preferably 0.01 kPa to 1 kPa.

In the step (ii), the maximum pressure in the container is preferably 0.01 MPa to 0.5 MPa.

A depressurization rate at which the inside of the container is depressurized and a pressurization rate at which the inside of the container is pressurized are not limited to particular values. However, the depressurization rate is preferably 10 to 600 kPa/min to efficiently cause the optical resin to flow around the bubble in the optical resin and increase the shear rate of the optical resin around the bubble. For the same reason, the pressurization rate is preferably 10 to 600 kPa/min.

As described above, the viscosity µ1 is a viscosity of the optical resin at a shear rate of 0.05 s⁻¹ at a temperature of the inside of the container in the depressurization in the step (i), and the viscosity µ2 is a viscosity of the optical resin at a shear rate of 0.05 s⁻¹ at a temperature of the inside of the container in the depressurization in the step (ii). Therefore, in the case where the temperature in the container does not vary throughout the depressurization and the pressurization, the viscosity µ1 and the viscosity µ2 of the optical resin are the same.

The viscosity µ1 and the viscosity µ2 are each preferably 100 Pa•s or more and 1000 Pa•s or less, more preferably 100 Pa•s or more and 900 Pa•s or less. When the viscosity of the optical resin at a shear rate of 0.05 s⁻¹ is in the above range, the volatile component can be efficiently removed from the optical resin by repeating the depressurization and the pressurization.

The optical resin may be, for example, supplied in a rod shape into the container and heated in the container to be molten, and, subsequently, the depressurization and the pressurization of the inside of the container may be performed. Alternatively, the optical resin in a molten state may be supplied into the container, and, subsequently, the depressurization and the pressurization of the inside of the container may be performed. However, melting of the optical resin in the container and subsequent debubbling in the same container by means of the depressurization and the pressurization make it possible to efficiently manufacture an optical resin formed body without further introduction of impurities and a volatile component.

In the optical resin formed body manufacturing method of the present embodiment, the temperature in the container in which the depressurization in the step (i) and the pressurization in the step (ii) are performed depends also on a glass transition temperature, etc. of the optical resin used, and is thus not limited to a particular value. When the optical resin used includes a later-described fluorine-containing polymer, for example, the depressurization in the step (i) and the pressurization in the step (ii) are preferably performed at a temperature of 200 to 300°C.

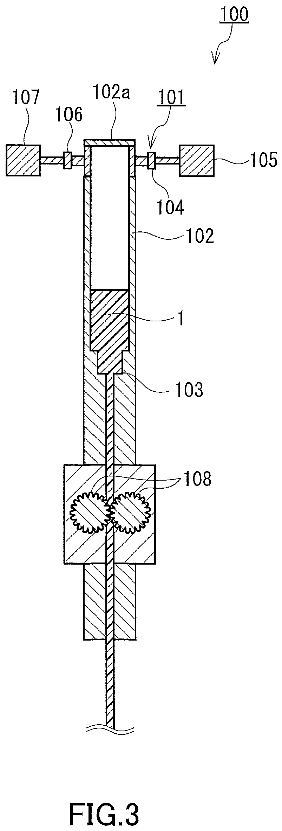

FIG. 3 is a schematic cross-sectional view showing an optical resin formed body manufacturing apparatus 100 which is an exemplary apparatus with which the optical resin formed body manufacturing method of the present embodiment can be performed. FIG. 3 illustrates an example in which an optical resin formed body is shaped into a fiber shape.

The apparatus 100 shown in FIG. 3 includes a container 101. The container 101 includes: a holding portion 102 that holds the optical resin 1; and an extrusion portion 103 that extrudes the optical resin 1 held in the holding portion 102 from the holding portion 102. The holding portion 102 is a tubular body having opening portions at its upper part and its lower part. The holding portion 102 includes a cover 102a. The upper opening portion of the holding portion 102 is closed by the cover 102a. The lower opening portion of the holding portion 102 is formed to discharge the molten optical resin 1 held in the holding portion 102 to an outside of the holding portion 102. That is, the lower opening portion of the holding portion 102 forms the extrusion portion 103. The apparatus 100 is further provided with a heating portion (not illustrated) such as a heater so that the optical resin 1 can be molten in the holding portion 102 and that the molten optical resin 1 can be kept in a molten state until shaped. Because of this, for example, the optical resin (preform) 1 in a rod shape can be molten by being put in the holding portion 102 through the upper opening portion of the holding portion 102 and then being heated in the holding portion 102.

The container 101 is further provided with a gas outlet 104 for discharging a gas in the holding portion 102 and a pump (e.g., a vacuum pump) 105 connected to the gas outlet 104 and configured to discharge the gas in the holding portion 102. That is, in the apparatus 100, the gas outlet 104 and the pump 105 compose a depressurization mechanism that depressurizes the inside of the holding portion 102. The container 101 is further provided with a gas inlet 106 for introducing a gas (e.g., nitrogen gas) into the holding portion 102 and a gas supply apparatus 107 connected to the gas inlet 106 and configured to supply the gas into the holding portion 102. That is, in the apparatus 100, the gas inlet 106 and the gas supply apparatus 107 compose a pressurization mechanism that pressurizes the inside of the holding portion 102.

In the apparatus 100, the optical resin 1 is extruded from the holding portion 102 through the extrusion portion 103, for example, by extrusion by gas. The above pressurization mechanism can be used to extrude the optical resin 1. That is, by introducing a gas (e.g., nitrogen gas) into the holding portion 102 from the gas supply apparatus 107 through the gas inlet 106, the pressure in the holding portion 102 is increased to extrude the molten optical resin 1 from the holding portion 102 through the extrusion portion 103. The optical resin 1 extruded through the extrusion portion 103 passes through, for example, a gear pump 108. The optical resin 1 having passed through the gear pump 108, for example, moves vertically downward and is shaped into a fiber shape. The gear pump 108 is provided to adjust the flow rate of the extruded optical resin 1. Since a fluctuation of the flow rate of the optical resin 1 can be reduced by allowing the optical resin 1 to pass through the gear pump 108, the fiber-shaped formed body can have a uniform thickness.

The apparatus 100 is further provided with a pressure control portion, which is not illustrated. The pressure control portion controls the above-described depressurization mechanism and pressurization mechanism, thereby depressurizing and pressurizing the inside of the holding portion 102 holding the molten optical resin 1 to remove a volatile component included in the optical resin 1.

When the optical resin formed body manufacturing method of the present embodiment is performed using the apparatus 100, the depressurization in the step (i) and the pressurization in the step (ii) are performed in the holding portion 102. The method for depressurizing and pressurizing the inside of the holding portion 102 to remove the volatile component from the optical resin 1 is as described above. In addition, taking out and shaping of the optical resin in the step (iii) are performed by extruding the molten optical resin 1 held in the holding portion 102 to the outside of the holding portion 102 through the extrusion portion 103.

The volatile component removed from the optical resin 1 by the above-described depressurization and pressurization of the inside of the holding portion 102 is removed to the outside of the holding portion 102, namely, an outside of the container 101, in the depressurization during the repetition of the depressurization and the pressurization of the inside of the holding portion 102. To remove the volatile component removed from the optical resin 1 to the outside of the holding portion 102, the inside of the holding portion 102 is desirably depressurized just before the optical resin 1 is extruded from the holding portion 102.

The optical resin used in the optical resin formed body manufacturing method of the present embodiment includes, for example, a fluorine-containing polymer. The fluorine-containing polymer is used for an optical member, such as a POF or an exposure member, or as a surface modifier or the like. The fluorine-containing polymer is a useful substance used in a wide range of fields. Therefore, an optical resin formed body manufactured by the manufacturing method of the present embodiment using the optical resin including the fluorine-containing polymer can be used as an optical member such as a POF. The optical resin formed body manufactured by the manufacturing method of the present embodiment may be, for example, a member included in a POF. The optical resin formed body manufactured by the manufacturing method of the present embodiment may be at least one selected from the group consisting of a core of a POF and a clad of a POF.

When the optical resin includes the fluorine-containing polymer in the present embodiment, it is preferred from the viewpoint of reducing light absorption attributable to stretching energy of a C-H bond that the fluorine-containing polymer be substantially free of a hydrogen atom, and it is particularly preferred that every hydrogen atom bonded to a carbon atom be substituted by a fluorine atom. That is, it is preferred that the fluorine-containing polymer included in the optical resin be substantially free of a hydrogen atom and be fully fluorinated. Herein, saying that the fluorine-containing polymer is substantially free of a hydrogen atom means that the content of a hydrogen atom in the fluorine-containing polymer is 1 mol% or less.

The fluorine-containing polymer preferably has a fluorine-containing aliphatic ring structure. The fluorine-containing aliphatic ring structure may be included in a main chain of the fluorine-containing polymer, or may be included in a side chain of the fluorine-containing polymer. The fluorine-containing polymer has, for example, a structural unit (A) represented by the following structural formula (1).

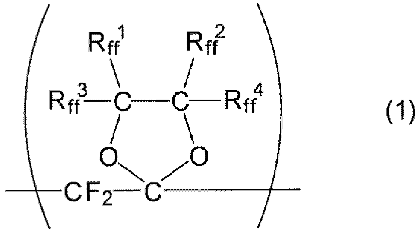

In the formula (1), R_{ff}¹ to R_{ff}⁴ each independently represent a fluorine atom, a perfluoroalkyl group having 1 to 7 carbon atoms, or a perfluoroalkyl ether group having 1 to 7 carbon atoms. R_{ff}¹ and R_{ff}² are optionally linked to form a ring. "Perfluoro" indicates that every hydrogen atom bonded to a carbon atom is substituted by a fluorine atom. In the formula (1), the number of carbon atoms in the perfluoroalkyl group is preferably 1 to 5, more preferably 1 to 3, and even more preferably 1. The perfluoroalkyl group may be linear or branched. Examples of the perfluoroalkyl group include a trifluoromethyl group, a pentafluoroethyl group, and a heptafluoropropyl group.

In the formula (1), the number of carbon atoms in the perfluoroalkyl ether group is preferably 1 to 5 and more preferably 1 to 3. The perfluoroalkyl ether group may be linear or branched. Examples of the perfluoroalkyl ether group include a perfluoromethoxymethyl group.

When R_{ff}¹ and R_{ff}² are linked to form a ring, the ring may be a five-membered ring or a six-membered ring. Examples of the ring include a perfluorotetrahydrofuran ring, a perfluorocyclopentane ring, and a perfluorocyclohexane ring.

Specific examples of the structural unit (A) include structural units represented by the following formulae (A1) to (A8).

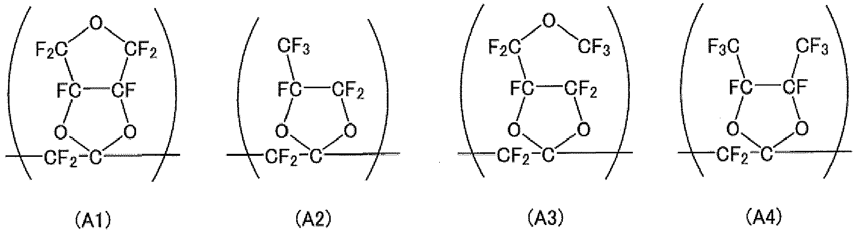

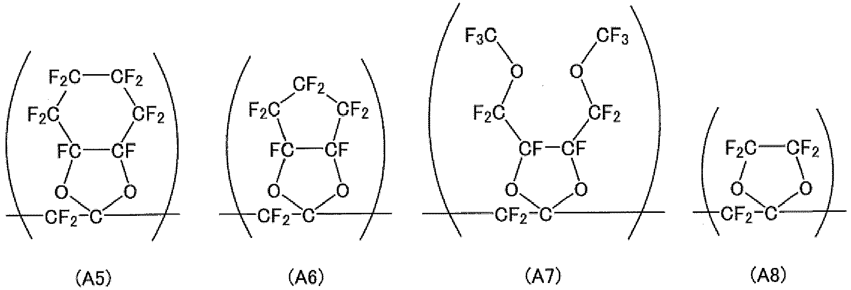

Among the structural units represented by the above formulae (A1) to (A8), the structural unit (A) is preferably the structural unit (A2), i.e., a structural unit represented by the following formula (2).

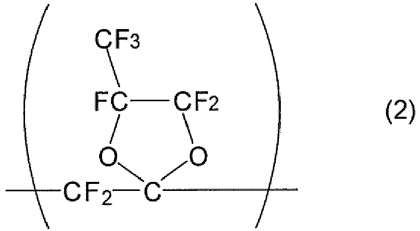

The fluorine-containing polymer may include one or more structural units (A).

In the fluorine-containing polymer, the content of the structural unit (A) is preferably 20 mol% or more and more preferably 40 mol% or more relative to a total content of all structural units. When including 20 mol% or more of the structural unit (A), the fluorine-containing polymer tends to have much higher thermal resistance. When including 40 mol% or more of the structural unit (A), the fluorine-containing polymer tends to have much higher transparency and much higher mechanical strength in addition to high thermal resistance. In the fluorine-containing polymer, the content of the structural unit (A) is preferably 95 mol% or less and more preferably 70 mol% or less relative to the total content of all structural units.

The structural unit (A) is derived from, for example, a compound represented by the following formula (3). In the formula (3), R_{ff}¹ to R_{ff}⁴ are as described for the formula (1). It should be noted that the compound represented by the formula (3) can be obtained, for example, by an already-known manufacturing method such as a manufacturing method disclosed in JP 2007-504125 A.

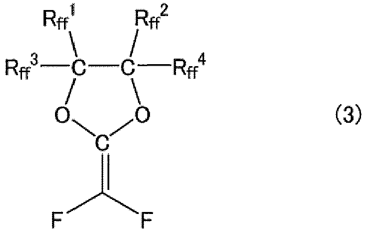

Specific examples of the compound represented by the above formula (3) include compounds represented by the following formulae (M1) to (M8).

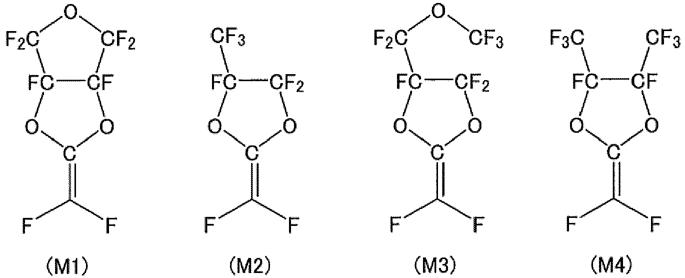

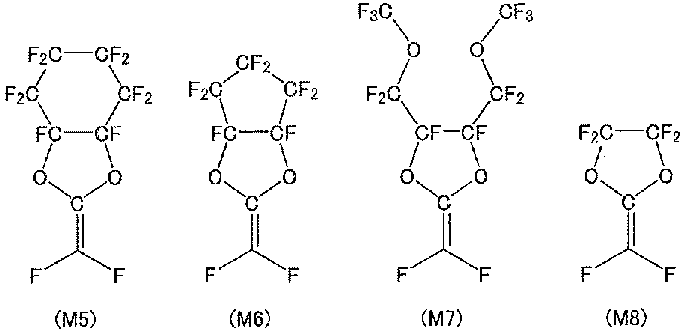

The fluorine-containing polymer may further include an additional structural unit other than the structural unit (A). Examples of the additional structural unit include the following structural units (B) to (D).

The structural unit (B) is represented by the following formula (4).

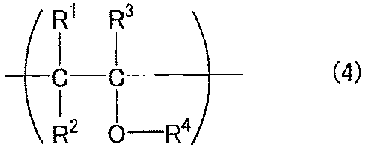

In the formula (4), R¹ to R³ each independently represents a fluorine atom or a perfluoroalkyl group having 1 to 7 carbon atoms. R⁴ represents a perfluoroalkyl group having 1 to 7 carbon atoms. The perfluoroalkyl group may have a ring structure. One or some of the fluorine atoms may be substituted by a halogen atom other than a fluorine atom. One or some of fluorine atoms in the perfluoroalkyl group may be substituted by a halogen atom other than a fluorine atom.

The fluorine-containing polymer may include one or more structural units (B). In the fluorine-containing polymer, the content of the structural unit (B) is preferably 5 to 10 mol% relative to the total content of all structural units. The content of the structural unit (B) may be 9 mol% or less or 8 mol% or less.

The structural unit (B) is derived from, for example, a compound represented by the following formula (5). In the formula (5), R¹ to R⁴ are as described for the formula (4). The compound represented by the formula (5) is a fluorine-containing vinyl ether such as perfluorovinyl ether.

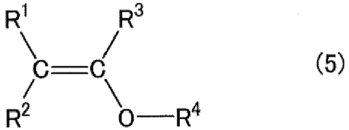

The structural unit (C) is represented by the following formula (6).

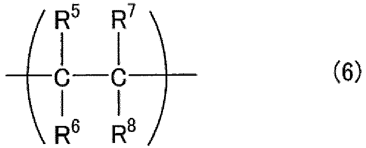

In the formula (6), R⁵ to R⁸ each independently represents a fluorine atom or a perfluoroalkyl group having 1 to 7 carbon atoms. The perfluoroalkyl group may have a ring structure. One or some of the fluorine atoms may be substituted by a halogen atom other than a fluorine atom. One or some of fluorine atoms in the perfluoroalkyl group may be substituted by a halogen atom other than a fluorine atom.

The fluorine-containing polymer may include one or more structural units (C). In the fluorine-containing polymer, the content of the structural unit (C) is preferably 5 to 10 mol% relative to the total content of all structural units. The content of the structural unit (C) may be 9 mol% or less or 8 mol% or less.

The structural unit (C) is derived from, for example, a compound represented by the following formula (7). In the formula (7), R⁵ to R⁸ are as described for the formula (6). The compound represented by the formula (7) is a fluorine-containing olefin such as tetrafluoroethylene or chlorotrifluoroethylene.

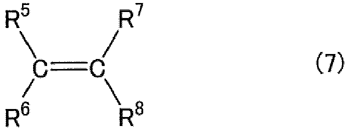

The structural unit (D) is represented by the following formula (8).

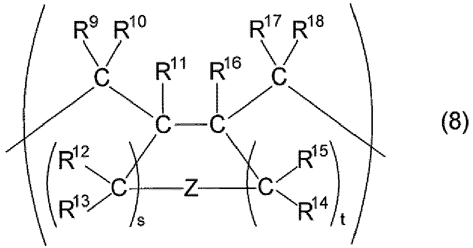

In the formula (8), Z represents an oxygen atom, a single bond, or -OC(R¹⁹R²⁰)O-, R⁹ to R²⁰ each independently represent a fluorine atom, a perfluoroalkyl group having 1 to 5 carbon atoms, or a perfluoroalkoxy group having 1 to 5 carbon atoms. One or some of the fluorine atoms may be substituted by a halogen atom other than a fluorine atom. One or some of fluorine atoms in the perfluoroalkyl group may be substituted by a halogen atom other than a fluorine atom. One or some of fluorine atoms in the perfluoroalkoxy group may be substituted by a halogen atom other than a fluorine atom. Symbols s and t are each independently 0 to 5, and s + t is an integer of 1 to 6 (when Z is -OC(R¹⁹R²⁰)O-, s + t may be 0).

The structural unit (D) is preferably represented by the following formula (9). The structural unit represented by the following formula (9) is a structural unit represented by the above formula (8), where Z is an oxygen atom, s is 0, and t is 2.

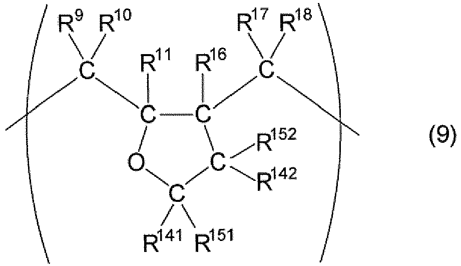

In the formula (9), R¹⁴¹, R¹⁴², R¹⁵¹, and R¹⁵² are each independently a fluorine atom, a perfluoroalkyl group having 1 to 5 carbon atoms, or a perfluoroalkoxy group having 1 to 5 carbon atoms. One or some of the fluorine atoms may be substituted by a halogen atom other than a fluorine atom. One or some of fluorine atoms in the perfluoroalkyl group may be substituted by a halogen atom other than a fluorine atom. One or some of fluorine atoms in the perfluoroalkoxy group may be substituted by a halogen atom other than a fluorine atom.

The fluorine-containing polymer may include one or more structural units (D). In the fluorine-containing polymer, the content of the structural unit (D) is preferably 30 to 67 mol% relative to the total content of all structural units. The content of the structural unit (D) is, for example, 35 mol% or more, may be 60 mol% or less or 55 mol% or less.

The structural unit (D) is, for example, derived from a compound represented by the following formula (10). In the formula (10), Z, R⁹ to R¹⁸, s, and t are as described for the formula (8). The compound represented by the formula (10) is a cyclopolymerizable fluorine-containing compound having two or more polymerizable double bonds.

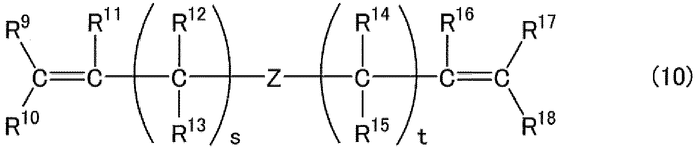

The structural unit (D) is preferably derived from a compound represented by the following formula (11). In the formula (11), R¹⁴¹, R¹⁴², R¹⁵¹, and R¹⁵² are as described for the formula (9).

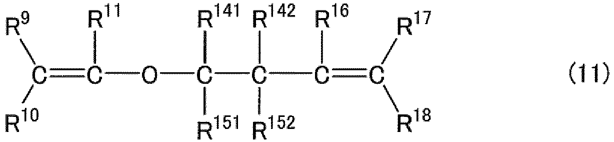

Specific examples of the compound represented by the formula (10) or the formula (11) include the following compounds.

CF₂=CFOCF₂CF=CF₂

CF₂=CFOCF(CF₃)CF=CF₂

CF₂=CFOCF₂CF₂CF=CF₂

CF₂=CFOCF₂CF(CF₃)CF=CF₂

CF₂=CFOCF(CF₃)CF₂CF=CF₂

CF₂=CFOCFClCF₂CF=CF₂

CF₂=CFOCCl₂CF₂CF=CF₂

CF₂=CFOCF₂OCF=CF₂

CF₂=CFOC(CF₃)₂OCF=CF₂

CF₂=CFOCF₂CF(OCF₃)CF=CF₂

CF₂=CFCF₂CF=CF₂

CF₂=CFCF₂CF₂CF=CF₂

CF₂=CFCF₂OCF₂CF=CF₂

CF₂=CFOCF₂CFClCF=CF₂

CF₂=CFOCF₂CF₂CCl=CF₂

CF₂=CFOCF₂CF₂CF=CFCl

CF₂=CFOCF₂CF(CF₃)CCl=CF₂

CF₂=CFOCF₂OCF=CF₂

CF₂=CFOCCl₂OCF=CF₂

CF₂=CClOCF₂OCCl=CF₂

The fluorine-containing copolymer of the present embodiment may further include an additional structural unit other than the structural units (A) to (D). However, the fluorine-containing copolymer of the present embodiment is preferably substantially free of an additional structural unit other than the structural units (A) to (D). That the fluorine-containing polymer is substantially free of an additional structural unit other than the structural units (A) to (D) means that a total content of the structural units (A) to (D) is 95 mol% or more and preferably 98 mol% or more relative to the total content of all structural units in the fluorine-containing polymer.

The method for polymerizing the fluorine-containing polymer is not limited to a particular one, and a common polymerization method such as radical polymerization can be used. A polymerization initiator for the polymerization of the fluorine-containing polymer may be a fully-fluorinated compound.

A glass transition temperature (Tg) of the fluorine-containing polymer is, for example, but not particularly limited to, 100°C to 140°C, and may be 105°C or higher or 120°C or higher. The term "Tg" herein refers to a midpoint glass transition temperature (T_{mg}) determined according to JIS K 7121: 1987.

The optical resin may include the fluorine-containing polymer as a main component, and preferably consists essentially of the fluorine-containing polymer.

The optical resin may further include an additive in addition to the fluorine-containing polymer. The additive is, for example, a refractive index modifier. As the refractive index modifier can be used, for example, a known refractive index modifier used for a resin composition used as the material of an optical member. For example, when the optical resin used in the optical resin formed body manufacturing method of the present embodiment is used as the material of a POF, the optical resin used in the optical resin formed body manufacturing method of the present embodiment can include a known refractive index modifier used as the material of a POF. The optical resin may include an additive other than the refractive index modifier.

An example in which an optical resin formed body to be manufactured is a core and a clad of a POF will be described as another example of the optical resin formed body manufacturing method of the present embodiment.

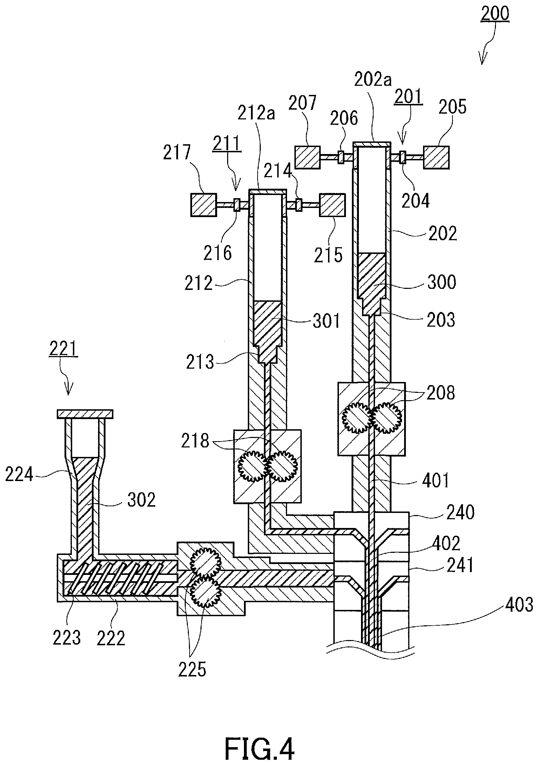

FIG. 4 is a schematic cross-sectional view showing a POF manufacturing apparatus 200 for manufacturing a core and a clad of a POF by the optical resin formed body manufacturing method of the present embodiment.

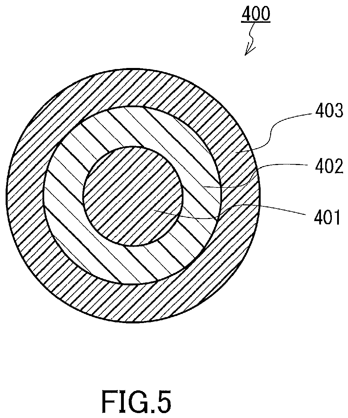

FIG. 5 is a cross-sectional view showing an example of a POF that can be manufactured using the apparatus 200. A POF 400 that can be manufactured using the apparatus 200 includes a core 401, a clad 402 disposed around the core 401, and an overclad (coating layer) 403 disposed around the clad 402.

The apparatus 200 shown in FIG. 4 includes an extrusion apparatus 201 for forming a core, an extrusion apparatus 211 for forming a clad, and an extrusion apparatus 221 for forming an overclad. The apparatus 200 further includes a first chamber 240 and a second chamber 241. The first chamber 240 and the second chamber 241 are vertically arranged in this order from top to bottom.

The extrusion apparatus 201 includes: a holding portion 202 that includes a cover 202a and that holds an optical resin 300 having composition suitable for the core 401 of the POF 400; and an extrusion portion 203 that extrudes the optical resin 300 held in the holding portion 202 from the holding portion 202. The holding portion 202 and the extrusion portion 203 respectively have the same functions as those of the holding portion 102 and the extrusion portion 103 of the apparatus 100 shown in FIG. 3. The extrusion apparatus 201 is further provided with a heating portion (not illustrated) such as a heater so that the optical resin 300 can be molten in the holding portion 202 and that the molten optical resin 300 can be kept in a molten state until shaped. Because of this, for example, the optical resin (preform) 300 in a rod shape can be molten by being put in the holding portion 202 through the upper opening portion of the holding portion 202 and then being heated in the holding portion 202.

The extrusion apparatus 201 is further provided with a gas outlet 204, a pump (e.g., a vacuum pump) 205, a gas inlet 206, and a gas supply apparatus 207. The gas outlet 204, the pump 205, the gas inlet 206, and the gas supply apparatus 207 have the same functions as those of the gas outlet 104, the pump 105, the gas inlet 106, and the gas supply apparatus 107 of the apparatus 100 shown in FIG. 3 and behave likewise. The apparatus 200 is further provided with a pressure control portion, which is not illustrated. The pressure control portion controls the gas outlet 204 and the pump 205 which are a depressurization mechanism and the gas inlet 206 and the gas supply apparatus 207 which are a pressurization mechanism, thereby depressurizing and pressurizing the inside of the holding portion 202 to remove a volatile component included in the optical resin 300. The method for depressurizing and pressurizing the inside of the holding portion 202 for removal of the volatile component is the same as that described for the depressurization in the step (i) and the pressurization in the step (ii).

In the apparatus 201, the optical resin 300 is extruded from the holding portion 202 through the extrusion portion 203, for example, by extrusion by gas. The optical resin 300 extruded through the extrusion portion 203 passes through, for example, a gear pump 208, then moves vertically downward, and is shaped into a fiber shape. The gear pump 208 has the same function as that of the gear pump 108 of the apparatus 100 shown in FIG. 3 and behaves likewise. The formed body delivered from the gear pump 108 and shaped into a fiber shape is supplied to the first chamber 240 and the second chamber 241 in this order.

The extrusion apparatus 211 includes, for example, a holding portion 212 that holds an optical resin 301 having composition suitable for the clad 402 of the POF 400. As an extrusion apparatus 210 can be used one described above as the extrusion apparatus 201. That is, the holding portion 212, an extrusion portion 213, a gas outlet 214, a pump 215, a gas inlet 216, a gas supply apparatus 217, and a gear pump 218 provided to the extrusion apparatus 210 respectively have the same functions as those of the holding portion 202, the extrusion portion 203, the gas outlet 204, the pump 205, the gas inlet 206, the gas supply apparatus 207, and the gear pump 208 provided to the extrusion apparatus 201 and behave likewise.

The optical resin 301 delivered from the gear pump 218 is supplied to the first chamber 240. The clad 402 covering the outer circumference of the formed body can be formed by coating a fiber-shaped formed body with the optical resin 301 in the first chamber 240. The formed body coated with the clad 402 moves from the first chamber 240 to the second chamber 241.

The extrusion apparatus 221 includes, for example, a holding portion 222 that holds a resin composition 302 having composition suitable for the overclad 403 of the POF 400, a screw 223 disposed inside the holding portion 222, and a hopper 224 connected to the holding portion 222. In the extrusion apparatus 221, for example, the resin composition 302 in a pellet shape is supplied to the holding portion 222 through the hopper 224. The resin composition 302 supplied to the holding portion 222 become soft and flowable, for example, by being kneaded by the screw 223 under heating. The softened resin composition 302 is extruded from the holding portion 222 by the screw 223.

The resin composition 302 extruded from the holding portion 221 is delivered to a gear pump 225. The gear pump 225 adjusts the flow rate of the resin composition 302 extruded from the extrusion apparatus 221.

The optical resin 302 delivered from the gear pump 225 is supplied to the second chamber 241. The overclad 403 covering the outer circumference of the clad 402 can be formed by coating the clad 402 with the resin composition 302 in the second chamber 241.

The refractive index of the optical resin 301 forming the clad 402 of the POF 400 is preferably lower than the refractive index of the optical resin 300 forming the core 401. Examples of a resin material included in the optical resin 301 include the above-described fluorine-containing resins, acrylic resins such as methyl methacrylate, styrene resins, and carbonate resins. Examples of a resin material included in the resin composition 302 of the overclad 403 of the POF 400 include polycarbonates, various engineering plastics, cyclo-olefin polymer, polytetrafluoroethylene (PTFE), modified PTFE, and tetrafluoroethylene-perfluoroalkoxyethylene copolymer (PFA).

The invention of the optical resin formed body manufacturing method has been described in present embodiment. However, the optical resin formed body manufacturing method of the present invention is also applicable as a method for shaping a common resin material into a fiber shape. For example, the optical resin formed body manufacturing method of the present invention can be an invention of the following resin fiber manufacturing method by replacing the optical resin with a common resin material and shaping the resin material into a fiber shape.

A resin fiber manufacturing method includes:
(I) depressurizing an inside of a container holding a molten resin material;
(II) pressurizing the inside of the container holding the molten resin material; and
(III) spinning by extruding the molten resin material out of the container to shape the molten resin material into a fiber shape, wherein

the steps (I) and (II) are sequentially performed once each or are alternately performed two or more times each,
in the step (I), a duration t1 [min] of the depressurization of the inside of the container is set such that the duration t1 and a viscosity µ1 [Pa•s] of the molten resin material satisfy a relation µ1/t1 < 200,
in the step (II), a duration t2 [min] of the pressurization of the inside of the container is set such that the duration t2 and a viscosity µ2 [Pa•s] of the molten resin material satisfy a relation µ2/t2 < 200,
the viscosity µ1 is a viscosity of the resin material at a shear rate of 0.05 s⁻¹ at a temperature in the container in the step (I), and
the viscosity µ2 is a viscosity of the resin material at a shear rate of 0.05 s⁻¹ at a temperature in the container in the step (II).

In the above resin fiber manufacturing method, the depressurization in the step (I) and the pressurization in the step (II) respectively correspond to the depressurization in the step (i) and the pressurization in the step (ii) in the optical resin formed body manufacturing method of the above present embodiment.

Moreover, the optical resin formed body manufacturing apparatus 100 shown in FIG. 3 can be used as an apparatus with which the above resin fiber manufacturing method is performed. That is, an invention of a resin fiber manufacturing apparatus can be defined as follows.

A resin fiber manufacturing apparatus includes:
a holding portion that holds a resin material serving as a raw material of a resin fiber;
an extrusion portion that allows the resin material held in the holding portion to be extruded out of the holding portion;
a heating portion that heats the holding portion;
a pressure control portion that controls a pressure in the holding portion;
a depressurization mechanism that depressurizes an inside of the holding portion; and
a pressurization mechanism that pressurizes the inside of the holding portion, wherein
the pressure control portion controls the pressure in the holding portion such that depressurization and pressurization are alternately repeated at least once,
the pressure control portion depressurizes the inside of the holding portion such that a duration t1 [min] of the depressurization of the inside of the holding portion and a viscosity µ1 [Pa•s] of the resin material that is molten satisfy a relation µ1/t1 < 200,
the pressure control portion pressurizes the inside of the holding portion such that a duration t2 [min] of the pressurization of the inside of the holding portion and a viscosity µ2 [Pa•s] of the resin material that is molten satisfy a relation µ2/t2 < 200,
the viscosity µ1 is a viscosity of the resin material at a shear rate of 0.05 s⁻¹ at a temperature in the holding portion in the depressurization,
the viscosity µ2 is a viscosity of the resin material at a shear rate of 0.05 s⁻¹ at the temperature in the holding portion in the pressurization, and
the resin material extruded through the extrusion portion is shaped into a fiber shape.

### EXAMPLES

Hereinafter, the present invention will be described in more detail by way of examples. The present invention is not limited to the following examples.

### [Production of optical resin]

A fluorine-containing polymer formed of the above structural unit (A2), i.e., the structural unit represented by the above formula (2), was produced as an optical resin. The fluorine-containing polymer was a polymer obtained by polymerization of perfluoro-4-methyl-2-methylene-1 ,3-dioxolane (PFMMD). The production method was specifically as follows.

An amount of 10 g of PFMMD and 80 mg of perfluorobenzoyl peroxide were sealed in a glass tube. This glass tube was subjected to three cycles of degassing using a freeze-thaw vacuum machine and was charged again with argon. The glass tube was sealed and then heated for 1 day at 50°C. The contents of the glass tube were thereby turned into a solid. The glass tube was further heated for 4 days at 70°C to obtain 10 g of a transparent stick-like body. A portion of the transparent stick-like body was dissolved in a hexafluorobenzene solution, to which chloroform was added to cause precipitation for purification. Solution polymerization of the monomer was performed in Fluorinert FC-75 (manufactured by Sumitomo 3M Ltd.) using perfluorobenzoyl peroxide as an initiator. A PFMMD polymer was obtained thereby.

### [Depressurization and pressurization treatment of optical resin]

The produced optical resin was subjected to a depressurization and pressurization treatment using an apparatus having the same configuration as the apparatus 100 shown in FIG. 3 at different temperatures and in different pressure switching cycles Δt. First, 200 g of the optical resin was placed in the holding portion 102 of the container 101, heated from ordinary temperature (25°C) to 250°C, 260°C, or 270°C at a temperature rise rate of 1 0°C/min, and then maintained at 260°C for 6 hours. Next, the inside of the container 101 was depressurized to 1 kPa at a depressurization rate of 200000 Pa/min using the vacuum pump 105, and then maintained for 1 min, 5 min, or 30 min. Then, nitrogen gas was led to the inside of the container 101 using the gas supply apparatus 107, the inside of the container 101 was pressurized to 0.1 MPa at a pressurization rate of 200000 Pa/min, and then maintained for 1 min, 5 min, or 30 min. The pressure switching cycle Δt of the depressurization and the pressurization was 1 min, 5 min, and 30 min at each temperature, and the depressurization and the pressurization were alternately performed 30 times, 6 times, and once each. Moreover, the optical resin was also subjected to a treatment in which a depressurization state at a pressure of 1 kPa was maintained for 60 min at 260°C; that is, an example was also performed in which pressurization was not performed and only depressurization was performed. Furthermore, an example was also performed in which the optical resin was maintained at ordinary pressure, namely, at a pressure of 0.1 MPa, for 60 min at 260°C. That is,
(1) the optical resins subjected to the depressurization and the pressurization alternately performed 30 times each in a pressure switching cycle of 1 min,
(2) the optical resins subjected to the depressurization and the pressurization alternately performed 6 times each in a pressure switching cycle of 5 min,
(3) the optical resins subjected to the depressurization and the pressurization performed once each in a pressure switching cycle of 30 min,
(4) the optical resin maintained at 260°C in a depressurization state at a pressure of 1 kPa for 60 min, and
(5) the optical resin maintained at 260°C at ordinary pressure, namely, at a pressure of 0.1 MPa, for 60 min
were evaluated. The evaluation was performed by visually observing a condition (included bubbles) of each optical resin after the depressurization and pressurization treatment. The visual evaluation was performed for each optical resin 60 minutes after the start of the depressurization and pressurization treatment. Table 1 shows the evaluation results. In Table 1, "∘" represents a case where the number of visually confirmed remaining bubbles was 5 or less, and "×" represents a case where the number of visually confirmed remaining bubbles was 6 or more.

### [Measurement of viscosity of optical resin]

Viscosities at a shear rate of 0.05 s⁻¹ at 250°C, 260°C, and 270°C were measured for the optical resin in the following manner.

A rotational rheometer "HAAKE MARS III" (manufactured by Thermo Fisher Scientific K.K.) was used as a measurement apparatus. A cone-plate geometry (ϕ20 mm, 4°) was used as a geometry. An optical resin sample was set between the cone and the plate stable at each measurement temperature within 15 minutes or less, and then the measurement was started. The viscosity measurement was performed at a shear rate of 0.01 to 5 (1/s) for a measurement time of 10 min. The results are as follows.
Viscosity at a shear rate of 0.05 s⁻¹ at 250°C: 900 Pa•s
Viscosity at a shear rate of 0.05 s⁻¹ at 260°C: 400 Pa•s
Viscosity at a shear rate of 0.05 s⁻¹ at 270°C: 200 Pa•s

**[Table 1]**

| | Pressure switching cycle Δt (min) | | | Pressure not switched Depressurization state maintained for 60 min | Pressure not switched Ordinary pressure state maintained for 60 min |
|---|---|---|---|---|---|
| | 1 min | 5 min | 30 min | | |
| Viscosity: 900 Pa•s (250°C) | × | ○ | ○ | - | - |
| Viscosity: 400 Pa•s (260°C) | × | ○ | ○ | × | × |
| Viscosity: 200 Pa•s (270°C) | × | ○ | ○ | - | - |

In the case where the relation "viscosity/pressure switching cycle Δt < 200" is satisfied, i.e., for the samples whose viscosities were 200 Pa•s, 400 Pa•s, and 900 Pa•s and for which the pressure switching cycles Δt were 5 min and 30 min, a volatile component was efficiently removed from the optical resins. It was impossible to efficiently remove a volatile component from the optical resins for which depressurization and pressurization were not performed alternately.

### INDUSTRIAL APPLICABILITY

According to the optical resin formed body manufacturing method of the present invention, decreases in the optical properties of the resulting optical resin formed body can be reduced and a volatile component can be efficiently removed from an optical resin. Therefore, the optical resin formed body manufacturing method of the present invention can be used, for example, for manufacturing of a POF, particularly, for manufacturing a core and a clad of a POF.

## Claims

1. A method for manufacturing an optical resin formed body, the method comprising:
(i) depressurizing an inside of a container holding a molten optical resin;
(ii) pressurizing the inside of the container holding the molten optical resin; and
(iii) shaping the optical resin taken out of the container into a given shape,
wherein
the steps (i) and (ii) are sequentially performed once each or are alternately performed two or more times each,
in the step (i), a duration t1 [min] of the depressurization of the inside of the container is set such that the duration t1 and a viscosity µ1 [Pa•s] of the molten optical resin satisfy a relation µ1/t1 < 200,
in the step (ii), a duration t2 [min] of the pressurization of the inside of the container is set such that the duration t2 and a viscosity µ2 [Pa•s] of the molten optical resin satisfy a relation µ2/t2 < 200,
the viscosity µ1 is a viscosity of the optical resin at a shear rate of 0.05 s⁻¹ at a temperature in the container in the step (i), and
the viscosity µ2 is a viscosity of the optical resin at a shear rate of 0.05 s⁻¹ at a temperature in the container in the step (ii).

2. The method according to claim 1, wherein the inside of the container at ordinary pressure is depressurized in the step (i).

3. The method according to claim 1 or 2, wherein the viscosity µ1 and the viscosity µ2 are each 100 Pa•s or more and 1000 Pa•s or less.

4. The method according to any one of claims 1 to 3, wherein the duration t1 and the duration t2 are each 5 min or more and 30 min or less.

5. The method according to any one of claims 1 to 4, wherein
the depressurization of the inside of the container in the step (i) and the pressurization of the inside of the container in the step (ii) are alternately performed in a pressure switching cycle Δt, and
the pressure switching cycle is a time interval at which the depressurization and the pressurization of the inside of the container are switched.

6. The method according to any one of claims 1 to 5, wherein the optical resin is molten by being heated in the container.

7. The method according to any one of claims 1 to 6, wherein
the container includes: a holding portion that holds the optical resin; and an extrusion portion that allows the optical resin held in the holding portion to be extruded from the holding portion,
the steps (i) and (ii) are performed in the holding portion, and
the step (iii) is performed by extruding the molten optical resin held in the holding portion from the holding portion to an outside through the extrusion portion.

8. The method according to any one of claims 1 to 7, wherein a volatile component in the optical resin is removed to an outside of the container in the depressurization of the inside of the container in the step (i).

9. The method according to any one of claims 1 to 8, wherein a ratio of a maximum pressure in the container in the pressurization in the step (ii) to a minimum pressure in the container in the depressurization in the step (i) is 100 or more.

10. The method according to any one of claims 1 to 9, wherein the minimum pressure in the container is 0.01 kPa to 1 kPa in the step (i).

11. The method according to any one of claims 1 to 10, wherein the maximum pressure in the container is 0.01 MPa to 0.5 MPa in the step (ii).

12. The method according to any one of claims 1 to 11, wherein the steps (i) and (ii) are performed at a temperature of 200 to 300°C.

13. The method according to any one of claims 1 to 12, wherein the optical resin taken out of the container is shaped into a fiber shape.

14. The method according to any one of claims 1 to 13, wherein the optical resin formed body is included in a plastic optical fiber.

15. The method according to claim 14, wherein the optical resin formed body is at least one selected from the group consisting of a core of the plastic optical fiber and a clad of the plastic optical fiber.

16. The method according to any one of claims 1 to 15, wherein the optical resin includes a fluorine-containing polymer.

17. The method according to claim 16, wherein the fluorine-containing polymer is substantially free of a hydrogen atom and is fully fluorinated.

18. The method according to claim 17, wherein the fluorine-containing polymer includes a polymer having a structural unit represented by the following structural formula (1): 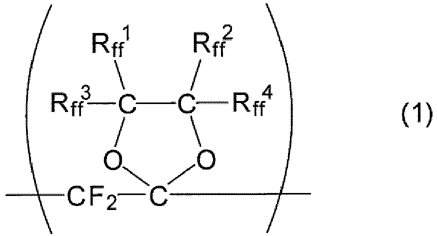 where R_{ff}¹ to R_{ff}⁴ each independently represent a fluorine atom, a perfluoroalkyl group having 1 to 7 carbon atoms, or a perfluoroalkyl ether group having 1 to 7 carbon atoms, and R_{ff}¹ and R_{ff}² are optionally linked to form a ring.

19. The method according to claim 18, wherein the fluorine-containing polymer includes a polymer having a structural unit represented by the following structural formula (2):

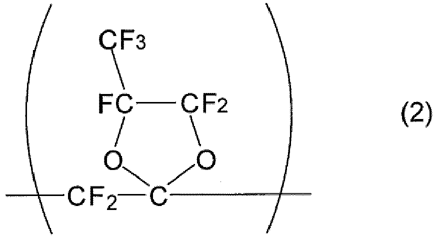

20. A resin fiber manufacturing method, comprising:
(I) depressurizing an inside of a container holding a molten resin material;
(II) pressurizing the inside of the container holding the molten resin material; and
(III) spinning by extruding the molten resin material out of the container to shape the molten resin material into a fiber shape, wherein
the steps (I) and (II) are sequentially performed once each or are alternately performed two or more times each,
in the step (I), a duration t1 [min] of the depressurization of the inside of the container is set such that the duration t1 and a viscosity µ1 [Pa•s] of the molten resin material satisfy a relation µ1/t1 < 200,
in the step (II), a duration t2 [min] of the pressurization of the inside of the container is set such that the duration t2 and a viscosity µ2 [Pa•s] of the molten resin material satisfy a relation µ2/t2 < 200,
the viscosity µ1 is a viscosity of the resin material at a shear rate of 0.05 s⁻¹ at a temperature in the container in the step (I), and
the viscosity µ2 is a viscosity of the resin material at a shear rate of 0.05 s⁻¹ at a temperature in the container in the step (II).

21. A resin fiber manufacturing apparatus, comprising:
a holding portion that holds a resin material serving as a raw material of a resin fiber;
an extrusion portion that allows the resin material held in the holding portion to be extruded out of the holding portion;
a heating portion that heats the holding portion;
a pressure control portion that controls a pressure in the holding portion;
a depressurization mechanism that depressurizes an inside of the holding portion; and
a pressurization mechanism that pressurizes the inside of the holding portion, wherein
the pressure control portion controls the pressure in the holding portion such that depressurization and pressurization are alternately repeated at least once,
the pressure control portion depressurizes the inside of the holding portion such that a duration t1 [min] of the depressurization of the inside of the holding portion and a viscosity µ1 [Pa•s] of the resin material that is molten satisfy a relation µ1/t1 < 200,
the pressure control portion pressurizes the inside of the holding portion such that a duration t2 [min] of the pressurization of the inside of the holding portion and a viscosity µ2 [Pa•s] of the resin material that is molten satisfy a relation µ2/t2 < 200,
the viscosity µ1 is a viscosity of the resin material at a shear rate of 0.05 s⁻¹ at a temperature in the holding portion in the depressurization,
the viscosity µ2 is a viscosity of the resin material at a shear rate of 0.05 s⁻¹ at the temperature in the holding portion in the pressurization, and
the resin material extruded through the extrusion portion is shaped into a fiber shape.
